# EUROPEAN PATENT APPLICATION

(11) **EP 4 780 056 A1**
(43) Date of publication of application: **22.07.2026**
(21) Application number: 24870613.7
(22) Date of filing: 20.09.2024
(51) Int. Cl.: H04W 24/08

(54) **COMMUNICATION METHOD AND APPARATUS**

(30) Priority: 28.09.2023 CN 202311294737
(71) Applicant: HUAWEI TECHNOLOGIES CO., LTD., Shenzhen, Guangdong 518129 (CN)
(72) Inventor: FAN, Qiang, Shenzhen, Guangdong 518129 (CN); LU, Yujiao, Shenzhen, Guangdong 518129 (CN); YOU, Chunhua, Shenzhen, Guangdong 518129 (CN); GU, Zhifang, Shenzhen, Guangdong 518129 (CN)
(74) Representative: Gill Jennings & Every LLP
(86) International application number: PCT/CN2024/120071
(87) International publication number: WO 2025/067069

(57) **Abstract**

This application relates to the field of communication technologies, and discloses a communication method and an apparatus. The method includes: An access network device receives a data packet set and first time information corresponding to the data packet set from a user plane functional network element, and determines, based on the first time information and receiving time when the access network device receives the data packet set, a delay budget of transmission of the data packet set in an access network. In this way, as the access network device can determine the delay budget of the transmission of the data packet set in the access network, the access network device can control the transmission of the data packet set in the access network, to ensure a transmission requirement of the data packet set for an end-to-end stable and low delay.

## Description

### CROSS-REFERENCE TO RELATED APPLICATIONS

This application claims priority to Chinese Patent Application No. 202311294737.4, filed with the China National Intellectual Property Administration on September 28, 2023, and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

With continuous development of a wireless communication system, a data transmission delay is continuously reduced, and a transmission capacity is increasingly large. The wireless communication system gradually penetrates into some services that have strong real-time performance and a requirement for a large data capacity, for example, an extended reality (extended reality, XR) service. Extended reality (extended reality, XR) refers to various environments that combine reality and virtuality and that are generated by computing technologies and wearable devices, and human-machine interaction. Specifically, the following typical forms are included: augmented reality (augmented reality, AR), virtual reality (virtual reality, VR), and mixed reality (mixed reality, MR).

The XR service is one of the multimedia services that are currently considered in the industrial field. For the XR service, an end-to-end transmission delay actually affects user service experience, that is, an overall transmission delay from generating a video frame on an application server side/terminal device side to transmitting the video frame to the terminal device side/application server side.

Therefore, further research on how to ensure a transmission requirement of the XR service for an end-to-end stable and low delay is still needed.

### SUMMARY

This application provides a communication method and an apparatus, to ensure a transmission requirement of an XR service for an end-to-end stable and low delay.

According to a first aspect, this application provides a communication method. The method may be applied to an access network device, or a processor, a chip, a chip system (for example, a system-on-a-chip (system-on-a-chip, SoC)), a functional module, or the like in the access network device. For example, the method is applied to the access network device. The access network device receives a data packet set and first time information corresponding to the data packet set from a user plane functional network element, and determines, based on the first time information and receiving time when the access network device receives the data packet set, a delay budget of transmission of the data packet set in an access network.

According to the foregoing method, the access network device can determine, based on the first time information and the receiving time when the access network device receives the data packet set, the delay budget of the transmission of the data packet set in the access network, so as to control the transmission of the data packet set in the access network, to ensure a transmission requirement of the data packet set for an end-to-end stable and low delay.

In a possible design, the method further includes: determining a data radio bearer DRB or a logical channel LCH corresponding to the delay budget of the transmission of the data packet set in the access network; and mapping the data packet set to the DRB or the LCH, and sending the data packet set to a terminal device.

In this way, the access network device can map the data packet set to a corresponding DRB or LCH based on the delay budget of the transmission of the data packet set in the access network, to implement controlling of the transmission of the data packet set in the access network, so as to ensure the transmission requirement of the data packet set for the end-to-end stable and low delay.

In a possible design, the DRB or the LCH is corresponding to a first delay range, and the delay budget of the transmission of the data packet set in the access network is within the first delay range.

In a possible design, the method further includes: determining, based on the delay budget of the transmission of the data packet set in the access network, earliest time when an access stratum of the terminal device delivers the data packet set to an upper layer; and sending second time information to the terminal device, where the second time information indicates the earliest time when the access stratum of the terminal device delivers the data packet set to the upper layer.

In this way, the access network device sends the second time information to the terminal device, so that the access stratum of the terminal device can deliver the data packet set based on the second time information, thereby reducing a quantity of problems that a transmission layer frequently adjusts congestion control and an application layer adjusts a speed.

In a possible design, the second time information is carried in a packet data convergence protocol PDCP packet header corresponding to a data packet in the data packet set; or the second time information is carried in a service data adaptation SDAP packet header corresponding to the data packet.

In a possible design, the first time information indicates a first delay, and the first delay is a delay of transmission of the data packet set in a data network or a delay budget of transmission of the data packet set in an access network and a core network. That the access network device determines, based on the first time information and the receiving time when the access network device receives the data packet set, the delay budget of the transmission of the data packet set in the access network, includes: receiving third time information from the user plane functional network element, where the third time information indicates sending time when the user plane functional network element sends the data packet set; determining, based on the receiving time when the access network device receives the data packet set and the sending time when the user plane functional network element sends the data packet set, a delay of transmission of the data packet set in the core network; and determining, based on the delay of the transmission of the data packet set in the core network and the first delay, the delay budget of the transmission of the data packet set in the access network. The foregoing sending time when the user plane functional network element sends the data packet set may be replaced with receiving time when the user plane functional network element receives the data packet set.

In a possible design, the third time information is carried in a general packet radio service tunneling protocol-user plane GTP-U packet header corresponding to a data packet in the data packet set.

In a possible design, the first time information indicates first time, and the first time is determined based on the sending time when the user plane functional network element sends the data packet set, a delay budget of the transmission of the data packet set in the data network, and the delay of the transmission of the data packet set in the data network. That the access network device determines, based on the first time information and the receiving time when the access network device receives the data packet set, the delay budget of the transmission of the data packet set in the access network includes: determining, based on the receiving time when the access network device receives the data packet set and the first time, the delay budget of the transmission of the data packet set in the access network. The foregoing sending time when the user plane functional network element sends the data packet set may be replaced with the receiving time when the user plane functional network element receives the data packet set.

In a possible design, the first time information is carried in the GTP-U packet header corresponding to the data packet in the data packet set.

In a possible design, the first time information indicates sending time when an application server sends the data packet set; or the first time information indicates generation time when the application server generates the data packet set. That the access network device determines, based on the first time information and the receiving time when the access network device receives the data packet set, the delay budget of the transmission of the data packet set in the access network includes: determining, based on the receiving time when the access network device receives the data packet set and the sending time or the generation time, the delay budget of the transmission of the data packet set in the access network.

In a possible design, the first time information is carried in a real-time transport protocol RTP packet header corresponding to a data packet in the data packet set; or the first time information is carried in an internet protocol IP packet header corresponding to the data packet.

According to a second aspect, this application provides a communication method. The method may be applied to a user plane functional network element, or a processor, a chip, a chip system (for example, an SoC), a functional module, or the like in the user plane functional network element. For example, the method is applied to the user plane functional network element. The user plane functional network element receives a data packet set and fourth time information corresponding to the data packet set from an application server; and determines a first delay based on the fourth time information and receiving time when the user plane functional network element receives the data packet set, where the first delay is a delay of transmission of the data packet set in a data network or a delay budget of transmission of the data packet set in an access network and a core network.

According to the foregoing method, the user plane functional network element can determine, based on the receiving time when the user plane functional network element receives the data packet set and sending time when the application server sends the data packet set, the delay of the transmission of the data packet set in the data network, so that the delay budget of the transmission of the data packet set in the access network and the core network can be more accurately determined, so as to control the transmission of the data packet set in a 5G system, to ensure a transmission requirement of the data packet set for an end-to-end stable and low delay.

In a possible design, the method further includes: determining a quality of service QoS flow or a QoS subflow corresponding to the first delay; and mapping the data packet set to the QoS flow or the QoS subflow, and sending the data packet set to an access network device.

In this way, the user plane functional network element can map the data packet set to a corresponding QoS flow or QoS subflow based on the first delay, to implement controlling of the transmission of the data packet set in the core network, so as to ensure the transmission requirement of the data packet set for the end-to-end stable and low delay.

In a possible design, the method further includes: receiving configuration information from a session management functional network element, where the configuration information is for configuring a second delay range to be corresponding to the QoS flow or the QoS subflow, and the first delay is within the second delay range.

In a possible design, the method further includes: sending first time information to the access network device, where the first time information indicates the first delay or a third delay range, and the first delay is within the third delay range; or the first time information indicates first time, and the first time is determined based on sending time when the user plane functional network element sends the data packet set, a delay budget of the transmission of the data packet set in the data network, and the delay of the transmission of the data packet set in the data network. The foregoing sending time when the user plane functional network element sends the data packet set may be replaced with the receiving time when the user plane functional network element receives the data packet set.

In a possible design, the first time information is carried in a GTP-U packet header corresponding to a data packet in the data packet set.

In a possible design, the first time information includes an index value, and the index value is associated with the first delay or the third delay range.

In a possible design, the fourth time information indicates the sending time when the application server sends the data packet set, or the fourth time information indicates generation time when the application server generates the data packet set.

In a possible design, the fourth time information is carried in an RTP packet header corresponding to a data packet in the data packet set; or the fourth time information is carried in an IP packet header corresponding to the data packet.

According to a third aspect, this application provides a communication apparatus. The communication apparatus can implement functions in the foregoing first aspect or second aspect. For example, the communication apparatus includes a corresponding module, unit, or means for performing operations in the foregoing first aspect or second aspect. The functions, unit, or means may be implemented by using software, may be implemented by using hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to operations in the foregoing first aspect or second aspect.

In a possible design, the communication apparatus includes a processor, and the processor may be configured to be coupled to a memory. The memory may store a computer program or instructions necessary for implementing the functions in the foregoing first aspect or second aspect. The processor may execute the computer program or the instructions stored in the memory. When the computer program or the instructions are executed, the communication apparatus is enabled to implement the method in any one of the possible designs or implementations of the foregoing first aspect or second aspect.

In a possible design, the communication apparatus includes a processor and a memory. The memory may store a computer program or instructions necessary for implementing the functions in the foregoing first aspect or second aspect. The processor may execute the computer program or the instructions stored in the memory. When the computer program or the instructions are executed, the communication apparatus is enabled to implement the method in any one of the possible designs or implementations of the foregoing first aspect or second aspect.

In a possible design, the communication apparatus includes a processor and an interface circuit. The processor is configured to communicate with another apparatus via the interface circuit, and perform the method in any one of the possible designs or implementations of the foregoing first aspect or second aspect.

It may be understood that in the foregoing third aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, this application provides a communication system. The communication system may include an access network device and a user plane functional network element. The access network device is configured to perform the method in the foregoing first aspect, and the user plane functional network element is configured to perform the method in the foregoing second aspect.

According to a fifth aspect, this application provides a computer-readable storage medium. The computer storage medium has a computer program (or computer-readable instructions) stored therein. When a computer reads and executes a part or all of the computer-readable instructions, the method in any one of the possible designs of the foregoing first aspect or second aspect is performed.

For example, the computer-readable storage medium may be any usable medium that can be accessed by the computer. For example but without any limitation, the computer-readable medium may include a non-transitory computer-readable medium, a random-access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a sixth aspect, this application provides a computer program product. When a computer reads and executes the computer program product, the method in any one of the possible designs of the foregoing first aspect or second aspect is performed.

According to a seventh aspect, this application provides a chip (or a chip system). The chip includes a processor, the processor is coupled to a memory, and the memory has computer programs stored therein. The processor is configured to invoke a part or all of the computer programs in the memory, to enable the method in any one of the possible designs of the foregoing first aspect or second aspect to be performed.

### BRIEF DESCRIPTION OF DRAWINGS

FIG. 1(a) and FIG. 1(b) are diagrams of a network architecture to which an embodiment of this application is applicable;
FIG. 2 is an example diagram of a structure of a protocol layer according to an embodiment of this application;
FIG. 3 is a diagram of transmission of downlink data between layers according to an embodiment of this application;
FIG. 4(a) and FIG. 4(b) are diagrams of a structure of a data packet according to an embodiment of this application;
FIG. 5(a) to FIG. 5(c) are diagrams of an end-to-end delay budget according to an embodiment of this application;
FIG. 6A is a schematic flowchart corresponding to a communication method according to an embodiment of this application;
FIG. 6B is a diagram of mapping according to an embodiment of this application;
FIG. 7A is a schematic flowchart corresponding to a communication method according to an embodiment of this application;
FIG. 7B is a diagram of mapping according to an embodiment of this application;
FIG. 8 is a diagram of a PDCP packet header carrying earliest time according to an embodiment of this application;
FIG. 9A is a schematic flowchart corresponding to a communication method according to an embodiment of this application;
FIG. 9B is a diagram of mapping according to an embodiment of this application;
FIG. 10 is an example block diagram of an apparatus according to an embodiment of this application; and
FIG. 11 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment.

In the specification, claims, and accompanying drawings of this application, the terms "first", "second", and the like, and various other term numerals (if existent) are intended to distinguish between similar objects but do not necessarily indicate a specific order or sequence. It should be understood that the data termed in such a way are interchangeable in proper circumstances, so that embodiments described herein can be implemented in an order other than the order illustrated or described herein. In addition, the terms "include", "have" and any other variants thereof are intended to cover non-exclusive inclusion. For example, a process, method, system, product, or device that includes a series of steps or units is not necessarily limited to those steps or units that are expressly listed, but may include other steps or units that are not expressly listed or inherent to the process, method, product, or device.

The technical solutions provided in this application may be applied to various communication systems, such as a 5^{th} generation (5^{th} generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communication system, for example, a 6^{th} generation mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

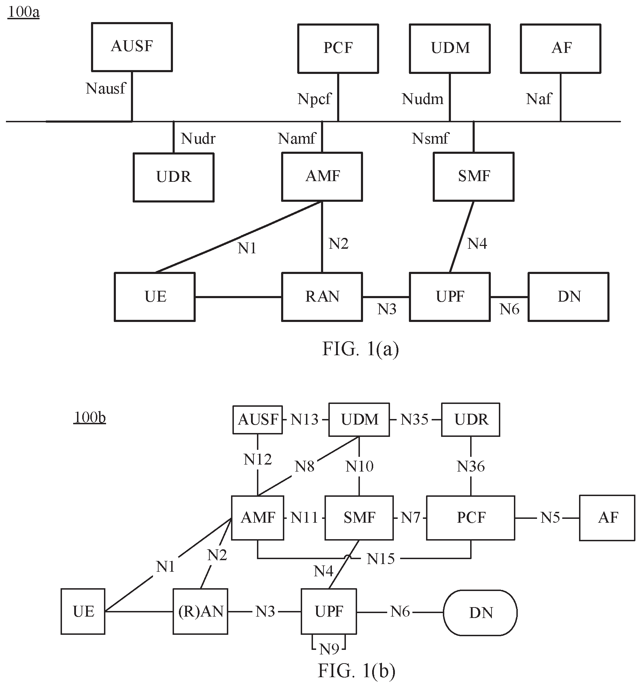

The following describes, by using examples with reference to FIG. 1(a) and FIG. 1(b), a 5G system to which embodiments of this application are applicable. It should be understood that the 5G system described in this specification is merely an example, and should not constitute any limitation on this application. It should be further understood that some network elements in the 5G system may communicate with each other through a service-oriented interface or a point-to-point interface. The following separately describes a 5G system framework based on the point-to-point interface and a 5G system framework based on the service-oriented interface with reference to FIG. 1(a) and FIG. 1(b).

In an example for description, FIG. 1(a) is a diagram of an architecture of a 5G system 100a to which an embodiment of this application is applicable. FIG. 1(a) is a diagram of a 5G network architecture based on a service-oriented interface. As shown in FIG. 1(a), the network architecture may include but is not limited to the following network elements (or referred to as functional network elements, functional entities, nodes, devices, or the like):
a (radio) access network (radio access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a data network (data network, DN), an authentication server function (authentication server function, AUSF) network element, a unified data management (unified data management, UDM) network element, a unified data repository (unified data repository, UDR), and the like.

The following briefly describes the network elements shown in FIG. 1(a).
1. User equipment (user equipment, UE): may be referred to as terminal equipment (terminal equipment), a terminal apparatus, an access terminal, a subscriber unit, a subscriber station, a mobile console, a mobile station (mobile station, MS), a mobile terminal (mobile terminal, MT), a remote station, a remote terminal, a mobile device, a user terminal, a terminal, a wireless communication device, a user agent, or a user apparatus. The terminal may be a device that provides voice/data connectivity for a user, for example, a handheld device or a vehicle-mounted device that has a wireless connection function. Currently, some examples of the terminal may be: a mobile phone (mobile phone), a pad (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, or a terminal in a future evolved public land mobile network (public land mobile network, PLMN).

In addition, the terminal may alternatively be a terminal in an internet of things (internet of things, IoT) system. IoT is an important part in future development of information technologies. A main technical feature of the IoT is to connect things to a network by using a communication technology, to implement an intelligent network for human-machine interconnection and thing-thing interconnection. An IoT technology can achieve massive connections, deep coverage, and terminal power saving by using, for example, a narrow band (narrow band, NB) technology.

In addition, the terminal may further include an intelligent printer, a train detector, and the like. Main functions include: collecting data (which is a function of a part of terminal devices), receiving control information and downlink data of a network device, and sending an electromagnetic wave to transmit uplink data to the network device.

It should be understood that the terminal may be any device that can access a network. The terminal and an access network device may communicate with each other by using an air interface technology.

Optionally, the terminal may be configured to serve as a base station. For example, the terminal may serve as a scheduling entity that provides sidelink signals between terminals in V2X, D2D, or the like. For example, a cellular phone and an automobile communicate with each other via a sidelink signal. The cellular phone communicates with a smart home device without relaying a communication signal via a base station.

2. (Radio) access network device: is referred to as an access network device for short in embodiments of this application, is configured to provide a network access function for authorized user equipment in a specific region, and can use transmission tunnels of different quality of service based on a level of the user equipment, a service requirement, and the like.

The access network device may manage a radio resource, provide an access service for the user equipment, and further complete forwarding of a control signal and data between the user equipment and a core network. The access network device may also be understood as a base station in a conventional network.

For example, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The access network device may be a macro base station, a micro base station, or an indoor base station, a relay node, or a donor node, or a radio controller in an open radio access network (open RAN, O-RAN, or ORAN) or a cloud radio access network (cloud radio access network, CRAN) scenario. Optionally, the access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the access network device in this application may alternatively be implemented through a software function running on hardware, or may be implemented through a virtualization function instantiated on a platform (for example, a cloud platform). The access network device in this application may alternatively be a logical node, a logical module, or software that can implement all or the part of the functions of the access network device.

In a possible scenario, a plurality of access network devices coordinate to assist a terminal device in implementing radio access, and different access network devices separately implement a part of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

3. UPF network element: is configured for packet routing and forwarding, quality of service (quality of service, QoS) processing for user plane data, and the like.

4. AMF network element: The access and mobility management functional network element is mainly configured for mobility management, access management, and the like, and may be configured to implement a function, for example, an access authorization/authentication function, in functions of an MME function other than session management.

5. SMF network element: is mainly configured for session management, internet protocol (internet protocol, IP) address allocation and management of user equipment, selection of an endpoint that can manage a user plane function and a policy control and charging function interface, downlink data notification, and the like.

6. PCF network element: is configured to guide a unified policy framework for network behavior, provide policy rule information for a control plane functional network element (for example, the AMF or the SMF), and the like.

7. AF network element: is configured to perform application-affected data routing, wirelessly access a network exposure functional network element, interact with a policy framework to perform policy control, and the like.

8. UDM network element: is configured to process an identifier of UE, and access authentication, registration, and mobility management, and the like.

9. AUSF network element: is configured to perform an authentication service and generate a key to implement bidirectional authentication on user equipment, and supports a unified authentication framework.

10. UDR: is configured to store subscription information of the UDM network element, policy information of the PCF network element, and the like.

11. DN: The DN is a network located outside an operator network. The operator network may access a plurality of DNs. Application servers corresponding to a plurality of services may be deployed in the DN, to provide a plurality of possible services for a terminal device.

Nausf, Nnef, Npcf, Nudm, Naf, Namf, Nsmf, N1, N2, N3, N4, and N6 in FIG. 1(a) are interface sequence numbers. For meanings of the interface sequence numbers, refer to meanings defined in a 3GPP standard protocol. This is not limited herein.

In the network architecture shown in FIG. 1(a), the network elements may communicate with each other through interfaces shown in the figure. For example, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmission of user plane data and the like. The SMF and the UPF may interact with each other through an N4 interface, and the N4 interface may be for transmission of information such as tunnel identification information of an N3 connection, data buffering indication information, and a downlink data notification message. The UPF and the DN may interact with each other through an N6 interface, and the N6 interface may be for transmission of user plane data and the like. Relationships between other interfaces and network elements are shown in FIG. 1(a). For brevity, details are not described herein.

FIG. 1(b) is a diagram of a 5G network architecture based on the point-to-point interface. For descriptions of functions of network elements in the figure, refer to descriptions of functions of corresponding network elements in FIG. 1(a). Details are not described again. A main difference between FIG. 1(b) and FIG. 1(a) lies in that interfaces between network elements in FIG. 1(b) are point-to-point interfaces rather than service-oriented interfaces. N1, N2, N4, N5, N7, N15, and the like in FIG. 1(b) are all interface sequence numbers. For meanings of the interface sequence numbers, refer to meanings defined in a 3GPP standard protocol. This is not limited herein.

The following first explains and describes related terms in embodiments of this application. It should be noted that these explanations are intended to facilitate understanding of embodiments of this application, but should not be considered as a limitation on the protection scope claimed in this application.

### 1. Data packet set

A data packet set is, for example, a protocol data unit (protocol data unit, PDU) set (PDU set). The PDU set includes one or more PDUs (namely, data packets) of a payload of one information unit generated by an application layer.

One data packet set may correspond to one data frame (that is, the data packet set may be replaced with the data frame). For example, one data packet set includes all data packets in one data frame. For example, one video frame generated by an XR application is large and is divided into 100 PDUs at an internet protocol (internet protocol, IP) layer, and the 100 PDUs are referred to as one PDU set. Alternatively, a plurality of data packet sets correspond to a same data frame. For example, a data packet set 1 and a data packet set 2 correspond to a same data frame, where the data packet set 1 includes a part of data packets in the data frame, and the data packet set 2 includes another part of data packets in the data frame. Alternatively, one data packet set corresponds to a plurality of data frames. For example, one data packet set includes data packets of a plurality of data frames.

Compared with a packet delay budget (packet delay budget, PDB) and a packet error rate (packet error rate, PER) in a conventional quality of service (quality of service, QoS) parameter, a standard introduces a protocol data unit set delay budget (PDU set delay budget, PSDB) and a protocol data unit set error rate (PDU set error rate, PSER) for an XR service. For example, in downlink transmission, for a PDU set, the PSDB represents a delay budget starting from time when a UPF network element receives a first PDU in the PDU set to time when a last PDU in the PDU set is successfully transmitted to a terminal device. For uplink transmission, the PSDB represents a delay budget starting from time when an AS layer of the terminal device receives the first PDU in the PDU set to time when the last PDU in the PDU set is successfully transmitted to the UPF network element. The PSER indicates a transmission success rate of the PDU set measured by using the PDU set as a granularity.

### 2. End-to-end delay budget of the data packet set

In the network architecture shown in FIG. 1(a) and FIG. 1(b), a user plane data transmission path may be established for the terminal device through a control plane signaling exchange procedure (for example, a PDU session establishment procedure), so that the terminal device can perform data transmission, through the user plane data transmission path, with the application server deployed in the data network. For example, the application server may send the data packet set to the terminal device, and a transmission path of the data packet set is: application server → UPF network element → access network device → terminal device. For another example, the terminal device may send the data packet set to the application server, and a transmission path of the data packet set is: terminal device → access network device → UPF network element → application server.

In other words, an end-to-end (end-to-end, E2E) transmission path of the data packet set may include a data network part (that is, a part between the application server and the UPF network element), a core network part (that is, a part between the UPF network element and the access network device), and an access network part (that is, a part between the access network device and the terminal device). Therefore, an end-to-end delay budget (which may be referred to as an E2E PSDB) of the data packet set may include a delay budget (which may be referred to as a DN PSDB) of transmission of the data packet set in the data network, a delay budget (which may be referred to as a CN PSDB) of transmission of the data packet set in a core network, and a delay budget (which may be referred to as an AN PSDB) of transmission of the data packet set in an access network. The delay budget of the transmission of the data packet set in the access network may also be described as a delay budget of transmission of the data packet set on an air interface.

For example, in the downlink transmission, from time when the application server generates or sends a data packet set to time when the data packet set is successfully sent from the application server to the UPF network element, duration is the DN PSDB. As timing starts when the UPF network element receives one data packet from the application server, and ends when one data packet set is successfully sent from the UPF network element to the access network device, duration is the CN PSDB. As timing starts when the access network device receives one data packet from the UPF network element, and ends when one data packet set is successfully sent from the access network device to the terminal device, duration is the AN PSDB.

### 3. Protocol layer structure

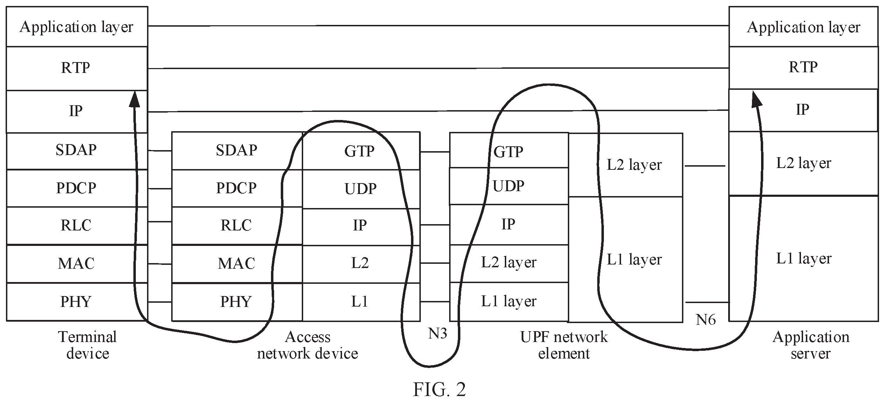

To implement end-to-end transmission of the data packet set, various communication devices need to comply with a corresponding protocol layer structure. FIG. 2 is an example diagram of a structure of a protocol layer. As shown in FIG. 2, a terminal device and an access network device may comply with an access network protocol layer structure. For descriptions of an access stratum protocol layer structure, refer to the following. A protocol layer structure between the access network device and a UPF network element may include an L1 layer (that is, a physical layer), an L2 layer (that is, a data link layer), a user datagram protocol (user datagram protocol, UDP) layer, an IP layer, a general packet radio service (general packet radio service, GPRS) tunnel protocol (GPRS tunnel protocol, GTP) layer, and the like. A protocol layer structure between the UPF network element and an application server may include the L1 layer and the L2 layer. The application server and the terminal device may further include a peer application layer, a transmission control protocol (transmission control protocol, TCP)/real-time transport protocol (real-time transport protocol, RTP) layer, and a UDP/IP layer. The following uses an example in which the terminal device and the application server include the RTP layer and the IP layer for description.

An access network protocol layer structure between the access network device and the terminal device may include a control plane protocol layer structure and a user plane protocol layer structure. A user plane protocol structure is used as an example in FIG. 2 for illustration. For example, the control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY). The user plane protocol layer structure may include the PDCP layer, the RLC layer, the MAC layer, and the physical layer. In a possible implementation, a service data adaptation (service data adaptation protocol, SDAP) layer may be further included above the PDCP layer. The SDAP layer, the PDCP layer, the RLC layer, the MAC layer, and the physical layer may also be collectively referred to as an access stratum. It can be learned from FIG. 2 that the terminal device further includes a non-access stratum, like a PDU session layer or an application layer. For detailed descriptions of protocol layers, refer to related technical specifications of a 3^{rd} generation partnership project (3^{rd} generation partnership project, 3GPP).

When the access network device and the terminal device perform user plane data transmission, data needs to pass through a user plane protocol layer, for example, through the SDAP layer, the PDCP layer, the RLC layer, the MAC layer, and the physical layer. For example, at least one data radio bearer (data radio bearer, DRB) is established between the access network device and the terminal device for data transmission. Each DRB may correspond to a functional entity set, for example, the functional entity set may include one PDCP layer entity, at least one RLC layer entity corresponding to the PDCP layer entity, at least one MAC layer entity corresponding to the at least one RLC layer entity, and at least one physical layer entity corresponding to the at least one MAC layer entity.

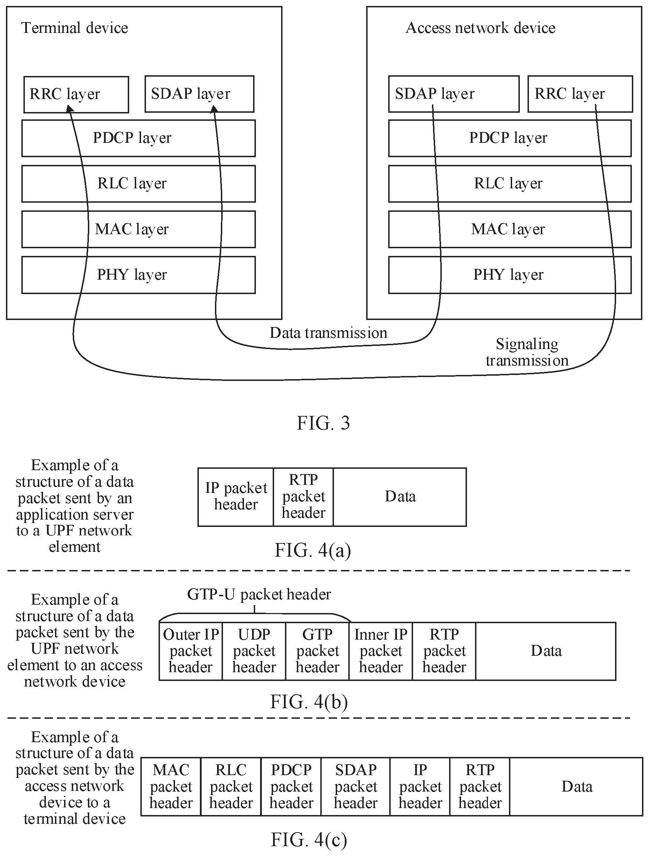

Downlink data transmission is used as an example. FIG. 3 shows that downlink data is transmitted between layers. As shown in FIG. 3, from a perspective of an access network device, after obtaining data, an SDAP layer entity of the access network device may map the data to a PDCP layer entity of a corresponding DRB based on a QoS flow indicator (QoS flow indicator, QFI) of the data. The PDCP layer entity may transfer the data to at least one RLC layer entity corresponding to the PDCP layer entity, then the at least one RLC layer entity transmits the data to a corresponding MAC layer entity, then the MAC layer entity generates a transport block, and then performs wireless transmission via a corresponding physical layer entity, to perform sending to the terminal device.

The downlink data may be correspondingly encapsulated at each layer of the access network device. Data received by a layer from an upper layer of the layer is considered as a service data unit (service data unit, SDU) of the layer, becomes a PDU after being encapsulated at the layer, and is then transferred to a next layer. For example, data received by the PDCP layer entity from the SDAP layer may be referred to as a PDCP SDU, and after encapsulating the PDCP SDU (for example, adding a PDCP layer packet header), the PDCP layer entity obtains a PDCP PDU and sends the PDCP PDU to the RLC layer. The PDCP PDU received by the RLC layer entity from the PDCP layer may be referred to as an RLC SDU, and after encapsulating the RLC SDU (for example, adding an RLC layer packet header), the RLC layer entity obtains an RLC PDU and sends the RLC PDU to the MAC layer. After receiving the RLC PDU, the MAC layer may encapsulate one or more RLC PDUs (and RLC PDU segments) into one MAC PDU, where the MAC PDU may also be referred to as the transport block, and send the transport block to the physical layer. After receiving the transport block, the physical layer may add check information, for example, cyclic redundancy check (cyclic redundancy check, CRC), to the transport block, and then send the transport block to the terminal device. Data may be transmitted between different layers through a corresponding path. For example, data may be transmitted between the RLC layer entity and the MAC layer entity through a logical channel (logical channel, LCH), and data may be transmitted between the MAC layer entity and the physical layer entity through a transport channel (transport channel).

From a perspective of the terminal device, after a physical layer of the terminal device receives the transport block from the access network device, the transport block may be sequentially submitted from the physical layer to upper layers, and may be correspondingly decapsulated at each layer. In other words, processing performed at each layer of the terminal device may be an inverse process of processing performed at each layer of the access network device.

### 4. Data packet structure

Based on the protocol layer structure shown in FIG. 2, the following uses downlink transmission as an example to briefly describe a structure of a data packet transmitted between different network elements or devices.

Refer to FIG. 4(a). A data packet sent by an application server to a UPF network element may be an IP data packet. For example, the IP data packet includes data generated at an application layer, an RTP packet header encapsulated at an RTP layer, and an IP packet header (which may also be referred to as an inner IP packet header) encapsulated at an IP layer.

Refer to FIG. 4(b), a data packet sent by the UPF network element to an access network device may be a GTP user plane (GTP-U) data packet. For example, the GTP-U data packet includes the IP data packet (the data generated at the application layer, the RTP packet header encapsulated at the RTP layer, and the IP packet header encapsulated at the IP layer) and a GTP-U packet header. The GTP-U packet header includes a GTP packet header encapsulated at a GTP layer, a UDP packet header encapsulated at a UDP layer, and the IP packet header encapsulated at the IP layer (which may also be referred to as an outer IP packet header).

Refer to FIG. 4(c), a data packet sent by the access network device to a terminal device may be a MAC PDU or a transport block. For example, the transport block includes the IP data packet (the data generated at the application layer, the RTP packet header encapsulated at the RTP layer, and the IP packet header encapsulated at the IP layer), an SDAP packet header encapsulated at an SDAP layer, a PDCP packet header encapsulated at a PDCP layer, an RLC packet header encapsulated at an RLC layer, and a MAC packet header encapsulated at a MAC layer.

It may be understood that, in embodiments of this application, the data packet in the data packet set may include the data generated at the application layer, and optionally, further include the RTP packet header encapsulated at the RTP layer and/or the IP packet header encapsulated at the IP layer. The following uses an example in which the data packet in the data packet is the IP data packet (that is, including the data generated at the application layer, the RTP packet header encapsulated at the RTP layer, and the IP packet header encapsulated at the IP layer) for description.

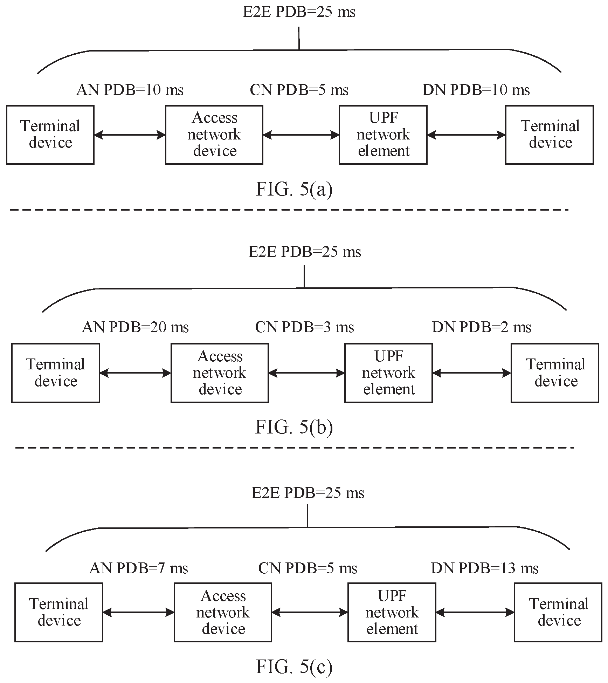

It can be learned from the foregoing descriptions that the end-to-end delay budget (which may be referred to as the E2E PSDB) of the data packet set may include the delay budget (which may be referred to as the DN PSDB) of the transmission of the data packet set in the data network, the delay budget (which may be referred to as the CN PSDB) of the transmission of the data packet set in the core network, and the delay budget (which may be referred to as the AN PSDB) of the transmission of the data packet set in the access network. As the data network is usually an IP network, a routing path and a transmission delay are uncontrollable, and large jitter may exist. Therefore, to ensure an end-to-end transmission delay requirement of the data packet set, a 5G communication system needs to perform conservative estimation on a transmission delay of a data network part. An XR service is used as an example. An end-to-end delay budget of a data packet set of the XR service is 25 milliseconds (ms), and the 5G communication system estimates that a probability of delay distribution of the transmission of the data packet set in the data network falling within 10 ms is 95%. Therefore, it may be conservatively considered that the delay budget of the transmission of the data packet set in the data network is 10 ms, and a remaining 15 ms delay budget is allocated in an access network part and a core network part. As shown in FIG. 5(a), a delay budget allocated to an access network device part is 10 ms, and a delay budget allocated to a core network part is 5 ms. In other words, a delay budget of transmission of a data packet set in an access network is 10 ms, and a delay budget of transmission of the data packet set in a core network is 5 ms.

However, the foregoing conservative delay budget division manner cannot ensure a transmission requirement of the data packet set for an end-to-end stable and low delay. For example, the foregoing conservative delay budget division manner may cause end-to-end delays of some data packet sets of the XR service to be small (far less than the end-to-end delay budget of the data packet set), and end-to-end delays of some data packet sets to be large (greater than the end-to-end delay budget of the data packet set).

For example, when a delay (that is, an actual transmission delay) of the transmission of the data packet set in the data network is less than the delay budget of the transmission of the data packet set in the data network, a delay budget of transmission of an actually remaining data packet set in the access network may be greater than a delay budget of transmission of a pre-allocated data packet set in the access network. For example, refer to FIG. 5(b). The delay of the transmission of the data packet set in the data network is 2 ms, the delay of the transmission of the data packet set in the core network is 3 ms, and the delay budget of the transmission of the actually remaining data packet set in the access network is 25 ms - 2 ms - 3 ms = 20 ms, which is far greater than the delay budget (that is, 10 ms) of the transmission of the pre-allocated data packet set in the access network. In this case, if the access network device ensures the transmission of the data packet set in the access network based on the pre-allocated 10 ms delay budget, an E2E PSDB may be excessively ensured (the end-to-end delay of the data packet set is far less than the E2E PSDB), and transmission resource utilization is low. In addition, when congestion occurs on an air interface, if the data packet set is still not successfully transmitted when an AN PSDB (that is, 10 ms) arrives, active packet discard is easily triggered, thereby reducing a PSER.

For another example, when the delay of the transmission of the data packet set in the data network is greater than the delay budget of the transmission of the data packet set in the data network, the delay budget of the transmission of the actually remaining data packet set in the access network may be less than the delay budget of the transmission of the pre-allocated data packet set in the access network. For example, refer to FIG. 5(c). The delay of the transmission of the data packet set in the data network is 13 ms, the delay of the transmission of the data packet set in the core network is 5 ms, and the delay budget of the transmission of the actually remaining data packet set in the access network is 25 ms - 13 ms - 5 ms = 7 ms, which is less than the delay budget (10 ms) of the transmission of the pre-allocated data packet set in the access network. In this case, if the access network device ensures the transmission of the data packet set in the access network based on the pre-allocated 10 ms delay budget, the E2E PSDB may be insufficiently ensured, and the end-to-end delay of the data packet set is greater than the E2E PSDB. Even if the data packet is successfully transmitted, a requirement for the end-to-end delay budget may still be violated.

Based on this, in embodiments of this application, a related implementation of ensuring the transmission requirement of the data packet set for the end-to-end stable and low delay is studied. For example, the communication method provided in embodiments of this application may include three possible solutions: Solution 1, Solution 2, and Solution 3.

In Solution 1, after receiving a data packet set from an application server, a UPF network element may determine a delay of transmission of the data packet set in a data network (that is, the UPF network element may sense the delay of the transmission of the data packet set in the data network) or a delay budget of transmission of the data packet set in an access network and a core network, so as to control the transmission of the data packet set in the core network by using the data packet set as a granularity, thereby ensuring a transmission requirement of the data packet set for an end-to-end stable and low delay, reducing a quantity of problems of low transmission resource utilization caused by excessively ensuring an E2E PSDB or a quantity of problems of end-to-end delay timeout of the data packet set caused by insufficiently ensuring the E2E PSDB.

In Solution 2, after receiving a data packet set from the UPF network element, the access network device may determine a delay budget (that is, a delay budget of transmission of an actually remaining data packet set in the access network) of the transmission of the data packet set in the access network, so as to control the transmission of the data packet set in the access network by using the data packet set as the granularity, thereby ensuring the transmission requirement of the data packet set for the end-to-end stable and low delay, reducing the quantity of problems of low transmission resource utilization caused by excessively ensuring the E2E PSDB or the problem of end-to-end delay timeout of the data packet set caused by insufficiently ensuring the E2E PSDB.

In Solution 3, after receiving a data packet set from a terminal device, the access network device may determine a delay of the transmission of the data packet set in the access network, and control the transmission of the data packet set in the core network based on the delay of the transmission of the data packet set in the access network (for example, map the data packet set to a QoS flow or a QoS subflow based on the delay of the transmission of the data packet set in the access network), thereby ensuring the transmission requirement of the data packet set for the end-to-end stable and low delay, reducing the quantity of problems of low transmission resource utilization caused by excessively ensuring the E2E PSDB or the quantity of problems of end-to-end delay timeout of the data packet set caused by insufficiently ensuring the E2E PSDB.

The following describes in detail embodiments of this application with reference to Embodiment 1 to Embodiment 3.

### Embodiment 1

In Embodiment 1, Solution 1 is described in detail.

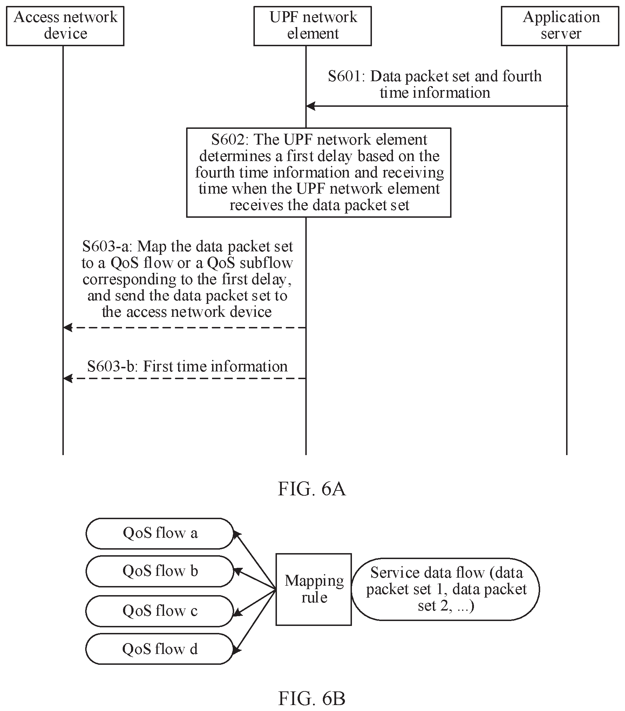

FIG. 6A is a schematic flowchart corresponding to a communication method according to an embodiment of this application. As shown in FIG. 6A, the method includes the following steps.

S601: An application server sends a data packet set and fourth time information corresponding to the data packet set to a UPF network element. Correspondingly, the UPF network element receives the data packet set and the fourth time information.

For example, the fourth time information indicates sending time when the application server sends the data packet set, or the fourth time information indicates generation time when the application server generates the data packet set. For example, after generating the data packet set, the application server may perform some possible processing on the data packet set, so as to send the data packet set. Therefore, the sending time when the application server sends the data packet set may be equal to the generation time when the application server generates the data packet set plus processing duration. If the fourth time information indicates the generation time when the application server generates the data packet set, a delay that is of transmission of the data packet set in a data network and that is subsequently determined by the UPF network element, may include the processing duration. In the following, an example in which "the fourth time information indicates the sending time when the application server sends the data packet set" is used for description.

There are a plurality of specific implementations in which the fourth time information indicates the sending time when the application server sends the data packet set. The following describes two possible implementations with reference to Implementation 1a and Implementation 2a.

### 1. Implementation 1a

In Implementation 1a, the fourth time information is carried in an RTP packet header corresponding to a first data packet in the data packet set. For example, if the first data packet is an IP data packet, the RTP packet header corresponding to the first data packet is an RTP packet header included in the first data packet. The first data packet may be an initial data packet, a last data packet, or another possible data packet in the data packet set. This is not specifically limited. For example, "the initial data packet in the data packet set" is used as an example. The initial data packet in the data packet set may be a data packet that is initially sent when the application server sends the data packet set. The foregoing "the last data packet in the data packet set" may be processed with reference to this case, and other similar parts may also be processed with reference to this case.

In an example, the fourth time information includes a first RTP timestamp, and network time protocol (network time protocol, NTP) time corresponding to the first RTP timestamp is the sending time when the application server sends the data packet set. An NTP is a standard internet protocol used for time synchronization on the Internet. For example, the NTP time is universal time coordinated (universal time coordinated, UTC) or global positioning system (global positioning system, GPS) time.

In this case, after receiving the fourth time information, the UPF network element may determine, based on the first RTP timestamp, the sending time when the application server sends the data packet set. For example, the UPF network element may obtain RTP-related information from the application server via an AF. The RTP-related information includes a correspondence between an initial RTP timestamp and the NTP time, and sampling frequency information of the RTP timestamp. When a session starts (or service transmission starts), the RTP timestamp may be initialized to an initial value (that is, the initial RTP timestamp). Subsequently, even if no signal is sent, a numeric value of the RTP timestamp needs to increase continuously with time, that is, increase continuously based on a preset sampling frequency. Therefore, the UPF network element can determine, based on the correspondence between the initial RTP timestamp and the NTP time, the sampling frequency information of the RTP timestamp, and the first RTP timestamp, the NTP time corresponding to first RTP time. For another example, the UPF network element may determine a sampling frequency of the RTP timestamp by using a correspondence between an RTP timestamp that is carried in at least one RTCP data packet sent by the application server and the NTP time. Further, the UPF may determine the NTP time corresponding to the first RTP timestamp. For example, the UPF network element receives two RTCP data packets that respectively carry an RTP timestamp a and NTP time a' that correspond to each other, and an RTP timestamp b and NTP time b' that correspond to each other. In this case, the UPF may determine that the sampling frequency of the RTP timestamp is (b' - a')/(b - a). When the UPF receives an RTP data packet that carries a timestamp c, the UPF may deduce that corresponding NTP time is a' + [(b' - a')/(b - a)] * (c - a).

For example, the initial RTP timestamp is 0, NTP time corresponding to the initial RTP timestamp is 10:00:00:000 on September 25, 2023, and the sampling frequency information of the RTP timestamp is sampling once every 1 millisecond. If the first RTP timestamp is 5, the NTP time corresponding to the first RTP timestamp is 10:00:00:005 on September 25, 2023.

For example, an XR service is used as an example, when receiving a data packet set of the XR service, the UPF network element may send request information to the application server by using the AF, where the request information is used to request the RTP-related information. Correspondingly, after receiving the request information, the application server sends the RTP-related information to the UPF network element by using the AF. Alternatively, when the XR service starts transmission or is about to start transmission, the application server may actively send the RTP-related information to the UPF network element by using the AF.

In another example, the fourth time information includes the sending time when the application server sends the data packet set, and the time may be the NTP time. In this case, after receiving the fourth time information, the UPF network element may obtain the sending time when the application server sends the data packet set.

### 2. Implementation 2a

In Implementation 1a, the fourth time information is carried in an IP packet header corresponding to the first data packet in the data packet set. For example, if the first data packet is the IP data packet, the IP packet header corresponding to the first data packet is an IP packet header included in the first data packet. The first data packet may be the initial data packet, the last data packet, or another possible data packet in the data packet set. This is not specifically limited.

For example, the fourth time information includes the sending time when the application server sends the data packet set. In this case, after receiving the fourth time information, the UPF network element may obtain the sending time when the application server sends the data packet set.

In addition, it may be understood that the application server may send one piece of fourth time information to the UPF network element, or may send a plurality of pieces of fourth time information. For example, the data packet set includes a data packet 1, a data packet 2, and a data packet 3. The plurality of pieces of fourth time information sent by the application server to the UPF network element include fourth time information 1, fourth time information 2, and fourth time information 3. The fourth time information 1 is carried in an RTP packet header or an IP packet header corresponding to the data packet 1, the fourth time information 2 is carried in an RTP packet header or an IP packet header corresponding to the data packet 2, and the fourth time information 3 is carried in an RTP packet header or an IP packet header corresponding to the data packet 3. The fourth time information 1, the fourth time information 2, and the fourth time information 3 are same information. Other similar parts (for example, the UPF network element sends first time information or third time information to an access network device) in embodiments of this application may be processed with reference to this case.

S602: The UPF network element determines a first delay based on the fourth time information and receiving time when the UPF network element receives the data packet set . The first delay is the delay of the transmission of the data packet set in the data network or a delay budget of transmission of the data packet set in a core network and an access network.

For example, the UPF network element may determine, based on the receiving time when the UPF network element receives the data packet set and the sending time when the application server sends the data packet set, the delay of the transmission of the data packet set in the data network. The delay of the transmission of the data packet set in the data network = the receiving time when the UPF network element receives the data packet set - the sending time when the application server sends the data packet set.

For example, for the foregoing Implementation 1a, the UPF network element may perform synchronization with an NTP server in advance, to obtain and maintain the NTP time. Further, when receiving the data packet set, the UPF network element may record the receiving time (for example, the receiving time is the NTP time) when the UPF receives the data packet set, and determine the delay (represented as δ₁) of the transmission of the data packet set in the data network based on the receiving time (represented as NTP_{receive time@UPF}) when the UPF network element receives the data packet set and the sending time (represented as NTP_{send time@server}) when the application server sends the data packet set. δ₁ is equal to a time interval between NTP_{receive time@UPF} and NTP_{send time@server}, that is, δ₁ = NTP_{receive time@UPF} - NTP_{send time@server}.

For another example, for the foregoing Implementation 2a, the UPF network element and the application server may negotiate in advance by using the AF, to be synchronized with a same clock source. For example, the UPF network element obtains clock source information of the application server by using an SMF network element or the AF, and then is synchronized with the same clock source as the application server based on the clock source information of the application server. The clock source may be the NTP server or a global navigation satellite system (global navigation satellite system, GNSS) clock. Further, when receiving the data packet set, the UPF network element may record the receiving time when the UPF receives the data packet set, and determine, based on the receiving time when the UPF network element receives the data packet set and the sending time when the application server sends the data packet set, the delay of the transmission of the data packet set in the data network.

Further, optionally, the UPF network element obtains an end-to-end delay budget of the data packet set, and determines the delay budget of the data packet set in the core network and the access network based on the end-to-end delay budget of the data packet set and the delay of the transmission of the data packet set in the data network. For example, the delay budget the transmission of the data packet set in the core network and the access network = the end-to-end delay budget of the data packet set - the delay the transmission of the data packet set in the data network (that is, E2E PSDB - δ₁). The UPF network element obtains the end-to-end delay budget of the data packet set in a plurality of manners. For example, the UPF network element obtains the end-to-end delay budget of the data packet set from the SMF network element. For another example, the UPF network element obtains the end-to-end delay budget of the data packet set from the application server by using the AF.

According to the foregoing method, the UPF network element can determine, based on the receiving time when the UPF network element receives the data packet set and the sending time when the application server sends the data packet set, the delay of the transmission of the data packet set in the data network, so that the delay budget (that is, the PSDB of the data packet set in a 5G system) of the transmission of the data packet set in the access network and the core network can be more accurately determined, so as to control transmission of the data packet set in the 5G system, to ensure a transmission requirement of the data packet set for an end-to-end stable and low delay.

Optionally, the foregoing method further includes S603-a and/or S603-b. S603-a or S603-b may alternatively be independently performed. When S603-a is independently performed, the UPF network element may determine the first delay according to the methods described in the foregoing S601 and S602, or may determine the first delay according to another possible method. This is not specifically limited. When S603-b is independently performed, the UPF network element may determine the first delay according to the methods described in the foregoing S601 and S602, or may determine the first delay according to another possible method. This is not specifically limited.

S603-a: The UPF network element determines a QoS flow or a QoS subflow corresponding to the first delay, maps the data packet set to the QoS flow or the QoS subflow corresponding to the first delay, and sends the data packet set to the access network device (that is, sends the data packet set to the access network device by using the QoS flow or the QoS subflow corresponding to the first delay).

Herein, the UPF network element may receive configuration information from the SMF network element. The configuration information is for configuring a correspondence between a delay range of a data packet set from an application (for example, corresponding to a specific quintuple) and a QoS flow/QoS subflow. For example, the configuration information is for configuring that a second delay range of a specified application is corresponding to a QoS flow 1 or a QoS subflow 1. Further, if the first delay is within the second delay range, the UPF network element may determine that the QoS flow or the QoS subflow corresponding to the first delay of receiving the data packet set from the application is the QoS flow 1 or the QoS subflow 1. The QoS flow may be represented by a QoS flow identifier (QoS flow ID, QFI), and the QoS subflow may be represented by a QFI and an additional subflow identifier.

The following describes the correspondence between the delay range and the QoS flow/QoS subflow with reference to Example 1 and Example 2.

### 1. Example 1

For example, the first delay is δ₁. For example, when δ₁ belongs to (0, t1], δ₁ corresponds to a QoS flow a; when δ₁ belongs to (t1, t2], δ₁ corresponds to a QoS flow b; and when δ₂ belongs to (t2, t3], δ₂ corresponds to a QoS flow c. Table 1 shows an example of a correspondence between a delay range to which δ₁ belongs and a QoS flow.

**Table 1: Example of a correspondence between a delay range to which δ₁ belongs and a QoS flow**

| Delay range to which δ₁ belongs | QFI |
|---|---|
| (0, 2 ms] | a |
| (2 ms, 5 ms] | b |
| (5 ms, 10 ms] | c |
| Greater than 10 ms | d |

Based on Table 1, refer to FIG. 6B. The UPF network element receives a service data flow (including a plurality of data packet sets), and may separately map, according to a mapping rule (that is, a correspondence between a delay of transmission of the plurality of data packet sets in the data network and the QoS flow), the plurality of data packet sets to different QoS flows for transmission. For example, the UPF network element receives a data packet set 1, and if it is determined that a delay of transmission of the data packet set 1 in the data network is 4.2 ms, the UPF network element may map the data packet set 1 to the QoS flow b for transmission. The UPF network element receives a data packet set 2, and if it is determined that a delay of transmission of the data packet set 2 in the data network is 6.2 ms, the UPF network element may map the data packet set 1 to the QoS flow c for transmission.

### 2. Example 2

For example, the first delay is E2E PSDB - δ₁. Table 2 shows an example of a correspondence between a delay range to which E2E PSDB - δ₁ belongs and a QoS flow.

**Table 2: Example of a correspondence between a delay range to which E2E PSDB - δ₁ belongs and a QoS flow**

| Delay range to which E2E PSDB - δ₁ belongs | QFI |
|---|---|
| (23 ms, 25 ms] | a |
| (20 ms, 23 ms] | b |
| (15 ms, 20 ms] | c |
| Less than 15 ms | d |

For example, for the service data flow, the UPF network element receives a data packet set. When a delay budget (that is, E2E PSDB - δ₁) of transmission of the data packet set in the core network and the access network is 21 ms, the UPF network element may map the data packet set to the QoS flow b for transmission.

The QoS flow a, the QoS flow b, the QoS flow c, and the QoS flow d in Table 1 or Table 2 may respectively correspond to different PDBs (the PDBs are delay budgets of transmission of data between the UPF network element and a terminal device). The following provides explanations and descriptions.

The XR service is used as an example. The SMF network element may determine a QoS parameter of each QoS flow of a plurality of QoS flows used for XR service transmission and a packet detection rule (packet detection rule, PDR) corresponding to each QoS flow. The QoS parameter of the QoS flow may include a PDB corresponding to the QoS flow, and the packet detection rule corresponding to each QoS flow may include a delay range corresponding to each QoS flow. The foregoing configuration information may include packet detection rules corresponding to the plurality of QoS flows.

For example, the plurality of QoS flows include the QoS flow a, the QoS flow b, the QoS flow c, and the QoS flow d. The correspondence in Table 1 is used as an example. Assuming that an end-to-end delay budget of the XR service is 25 ms, a sum of a maximum value of the delay range corresponding to the QoS flow and the PDB corresponding to the QoS flow may be less than or equal to 25 ms, so as to ensure a requirement for an end-to-end delay budget. For example, when a delay range corresponding to the QoS flow a is (0, 2 ms], a PDB corresponding to the QoS flow a may be 23 ms; when a delay range corresponding to the QoS flow b is (2 ms, 5 ms], a PDB corresponding to the QoS flow b may be 20 ms; when a delay range corresponding to the QoS flow c is (5 ms, 10 ms], a PDB corresponding to the QoS flow c may be 15 ms; and when a delay range corresponding to the QoS flow d is greater than 10 ms, a PDB corresponding to the QoS flow d may be 10 ms.

S603-b: The UPF network element sends first time information corresponding to the data packet set to the access network device. Correspondingly, the access network device receives the first time information.

The following describes the first time information with reference to Implementation 1b and Implementation 2b.

### 1. Implementation 1b

In implementation 1b, the first time information indicates the first delay or a third delay range, and the first delay is within a third time range.

For example, the first time information includes a specific value of the first delay, and a unit of the first delay included in the first time information may be 1 microsecond, 1 microsecond, 100 microseconds, or 1 millisecond. For example, the unit of the first delay included in the first time information is 1 millisecond. If the first delay determined by the UPF network element is 3.2 milliseconds, the 3.2 milliseconds may be truncated to 3 milliseconds, that is, the specific value of the first delay included in the first time information is 3 milliseconds.

For another example, the first time information includes an index value, and the index value is associated with the first delay; or the index value is associated with the third delay range, and the first delay is within the third delay range. For example, the index value is associated with the delay range. A plurality of index values and delay ranges associated with the plurality of index values may be preconfigured in the UPF network element and the access network device. For example, the first delay is δ₁. Table 3 shows an example of a plurality of index values and delay ranges associated with the plurality of index values.

**Table 3: Example of a plurality of index values and delay ranges associated with the plurality of index values**

| Index value | Delay range |
|---|---|
| 0 | (0, 1 ms] |
| 1 | (1 ms, 2 ms] |
| 2 | (2 ms, 3 ms] |
| 3 | (3 ms, 5 ms] |
| 4 | > 5 ms |

For example, if the first delay (δ₁) determined by the UPF network element is 3.2 ms, the first time information may include an index value 3.

For Implementation 1b, the UPF network element may further send third time information to the access network device, where the third time information indicates sending time when the UPF network element sends the data packet set or receiving time when the UPF network element receives the data packet set, so that the access network device determines, based on the first time information and the third time information, a delay budget of transmission of the data packet set in the access network. For specific implementation, refer to descriptions in Embodiment 2.

For example, the third time information may be carried in a GTP-U packet header corresponding to a second data packet in the data packet set. For example, if the second data packet is an IP data packet, the GTP-U packet header corresponding to the second data packet is a GTP-U packet header of a GTP-U data packet in which the second data packet is located. The second data packet may be an initial data packet, a last data packet, or another possible data packet in the data packet set.

### 2. Implementation 2b

In Implementation 2b, the first time information indicates first time. The UPF network element may determine the first time based on the sending time (represented as t_{send time@UPF}) when the UPF network element sends the data packet set, a pre-allocated delay budget (represented as DN PSDB) of the transmission of the data packet set in the data network, and the delay (δ₁) of the transmission of the data packet set in the data network. For example, the first time = t_{send time@UPF} + (DN PDB - δ₁). Optionally, in another manner of determining the first time, the UPF network element may determine the first time based on the receiving time (represented as t_{receive time@UPF}) when the UPF network element receives the data packet set, the pre-allocated delay budget (represented as DN PSDB) of the transmission of the data packet set in the data network, and the delay (δ₁) of the transmission of the data packet set in the data network. For example, the first time = t_{receive time@UPF} + (DN PDB - δ₁). The UPF network element may obtain, in a plurality of manners, the pre-allocated delay budget of the transmission of the data packet set in the data network. A specific implementation is not limited.

For the foregoing Implementation 1b and Implementation 2b, the first time information may be carried in a GTP-U packet header corresponding to a third data packet in the data packet set. For example, if the third data packet is the IP data packet, the GTP-U packet header corresponding to the third data packet is a GTP-U packet header of a GTP-U data packet in which the third data packet is located. The third data packet may be the initial data packet, the last data packet, or another possible data packet in the data packet set.

It may be understood that, in another implementation, the first time information may be the fourth time information, that is, after receiving the fourth time information from the application server, the UPF network element forwards the fourth time information to the access network device. As the fourth time information is carried in the RTP packet header or the IP packet header, the access network device needs to parse the RTP packet header or the IP packet header to obtain the fourth time information, so as to obtain the sending time when the application server sends the data packet set (or the generation time when the application server generates the data packet set). For specific implementation of "the access network device obtains the sending time when the application server sends the data packet set", refer to descriptions of "the UPF network element obtains the sending time when the application server sends the data packet set".

According to the foregoing method, the UPF network element can map, based on the first delay, the data packet set to the QoS flow or the QoS subflow corresponding to the first delay. For example, if the delay of the transmission of the data packet set in the data network is large, the data packet set may be mapped to a QoS flow or a QoS subflow with a small PDB; or if the delay of the transmission of the data packet set in the data network is small, the data packet set may be mapped to a QoS flow or a QoS subflow with a large PDB, so as to ensure a transmission requirement of the data packet set for an end-to-end stable and low delay. In addition, the UPF **network** element may further send the first time information to the access network device, so that the access network device determines the delay budget of the transmission of the data packet set in the access network.

### Embodiment 2

In Embodiment 2, Solution 2 is described in detail.

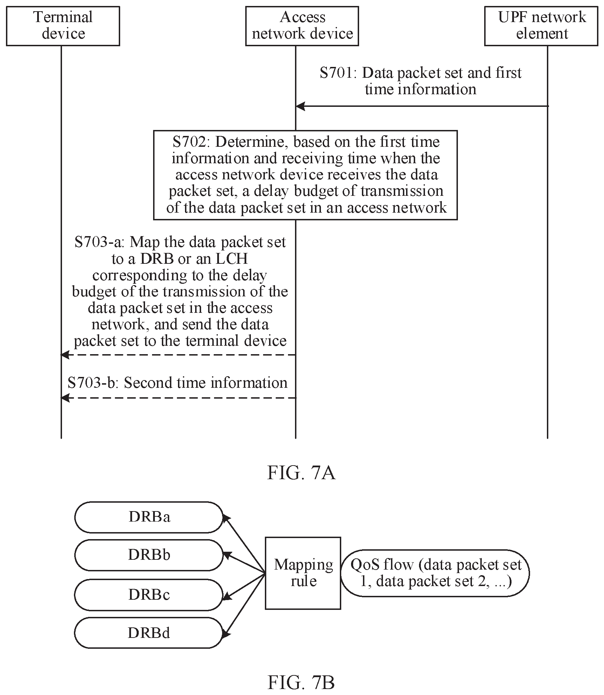

FIG. 7A is a schematic flowchart corresponding to a communication method according to an embodiment of this application. As shown in FIG. 7A, the method includes the following steps.

S701: A UPF network element sends a data packet set and first time information corresponding to the data packet set to an access network device. Correspondingly, the access network device receives the data packet set and the first time information.

For example, for an implementation in which the UPF network element sends the first time information to the access network device, refer to the descriptions in S603-b in Embodiment 1.

S702: The access network device determines, based on the first time information and receiving time when the access network device receives the data packet set, a delay budget of transmission of the data packet set in an access network.

For example, the access network device and the UPF network element may perform clock synchronization. For example, the UPF network element and the access network device may perform the clock synchronization according to a generalized clock synchronization protocol (generalized precision time protocol, gPTP) protocol, or the UPF network element and the access network device may be synchronized with a same clock source, for example, a GNSS clock.

For example, in the foregoing Implementation 1b, the first time information indicates the first delay, and the UPF network element may further send the third time information to the access network device. The third time information indicates the sending time when the UPF network element sends the data packet set. In this case, when receiving the data packet set, the access network device may record the receiving time when the access network device receives the data packet set; and determine, based on the receiving time (represented as t_{receive time@RAN}) when the access network device receives the data packet set and sending time (represented as t_{send time@UPF}) when the user plane functional network element sends the data packet set, a delay (represented as δ₂) of transmission of the data packet set in a core network, where δ₂ = t_{receive time@RAN} - t_{send time@UPF}. Optionally, the third time information indicates receiving time when the UPF network element receives the data packet set from a data network. In this case, δ₂ = t_{receive time@RAN} - t_{receive time@UPF}, where t_{receive time@UPF} is the receiving time when the UPF network element receives the data packet set.

Further, if the first delay is a delay of transmission of the data packet set in the data network, the access network device may determine, based on the delay (δ₂) of the transmission of the data packet set in the core network, the delay (δ₁) of the transmission of the data packet set in the data network, and an end-to-end delay budget (E2E PSDB) of the data packet set, the delay budget (represented as AN PSDB') of the transmission of the data packet set in the access network, where AN PSDB' = E2E PSDB - δ₂ - δ₁. If the first delay is a delay budget (that is, E2E PSDB - δ₁) of the transmission of the data packet set in the access network and the core network, the access network device may determine, based on the delay (δ₂) of the transmission of the data packet set in the core network and the delay budget (that is, E2E PSDB - δ₁) of the transmission of the data packet set in the access network and the core network, the delay budget (that is, AN PSDB') of the transmission of the data packet set in the access network, where AN PSDB' = E2E PSDB - δ₂ - δ₁.

The access network device obtains the end-to-end delay budget of the data packet set in a plurality of manners. For example, the access network device may obtain the end-to-end delay budget of the data packet set from an SMF network element.

It may be understood that the foregoing uses an example in which the first time information indicates the first delay. In another example, if the first time information indicates a third delay range (the first delay is within the third delay range), in this case, the access network device may determine a range of the delay budget of the transmission of the data packet set in the access network.

For another example, in the foregoing Implementation 2b, the first time information indicates the first time. In this case, when receiving the data packet set, the access network device may record the receiving time when the access network device receives the data packet set; and determine, based on the receiving time (that is, t_{receive time@RAN}) when the access network device receives the data packet set, the first time (that is, t_{send time@UPF} + (DN PDB - δ₁), or t_{receive time@UPF} + (DN PDB - δ₁)), and a pre-allocated delay budget (denoted as 5GS PSDB) of transmission of the data packet set in the access network device and the core network, the delay budget (that is, AN PSDB') of the transmission of the data packet set in the access network, where AN PSDB' = 5GS PSDB - {t_{receive time@RAN} - t_{send time@UPF} + (DN PDB - δ₁)]}, or AN PSDB' = 5GS PSDB - {t_{receive time@RAN} - t_{receive time@UPF} + (DN PDB - δ₁)]).

For another example, the first time information indicates sending time when the application server sends the data packet set (or generation time when the application server generates the data packet set). In this case, when receiving the data packet set, the access network device may record the receiving time when the access network device receives the data packet set; and determine, based on the receiving time (that is, t_{receive time@RAN}) when the access network device receives the data packet set and the sending time (that is, t_{send time@server}) when the application server sends the data packet set, the delay budget (that is, AN PSDB') of the transmission of the data packet set in the access network, where AN PSDB' = t_{receive time@RAN} - t_{send time@server}. The access network device and the application server may be synchronized to a same clock source.

According to the foregoing method, the access network device can determine, based on the first time information and the receiving time when the access network device receives the data packet set, the delay budget of the transmission of the data packet set in the access network, so as to control the transmission of the data packet set in the access network, to ensure a transmission requirement of the data packet set for an end-to-end stable and low delay.

Optionally, the foregoing method further includes S703-a and/or S703-b. S703-a or S703-b may alternatively be independently performed. When S703-a is independently performed, the access network device may determine the delay budget of the transmission of the data packet set in the access network according to the methods described in the foregoing S701 and S702, or may determine the delay budget of the transmission of the data packet set in the access network according to another possible method. This is not specifically limited. When S703-b is independently performed, the access network device may determine the delay budget of the transmission of the data packet set in the access network according to the methods described in the foregoing S701 and S702, or may determine the delay budget of the transmission of the data packet set in the access network according to another possible method. This is not specifically limited.

S703-a: The access network device determines a DRB or an LCH corresponding to the delay budget of the transmission of the data packet set in the access network, maps the data packet set to the corresponding DRB or logical channel, and sends the data packet set to a terminal device.
1. Descriptions of a specific implementation in which the access network device determines the DRB corresponding to the delay budget of the transmission of the data packet set in the access network

An XR service is used as an example. In a possible implementation, if the SMF network element configures that the XR service corresponds to one QoS flow, the access network device may configure that the QoS flow corresponds to a plurality of DRBs, and configure a correspondence between the plurality of DRBs and the delay range to which the AN PSDB' belongs.

Table 4 shows an example of a correspondence between the DRBs and the delay range to which the AN PSDB' belongs.

**Table 4: Example of a correspondence between the DRBs and the delay range to which the AN PSDB belongs**

| Delay range to which AN PSDB' belongs | DRB identifier |
|---|---|
| (0, 2 ms] | a |
| (2 ms, 5 ms] | b |
| (5 ms, 10 ms] | c |
| Greater than 10 ms | d |

Based on Table 4, refer to FIG. 7B. The access network device receives a plurality of data packet sets, and may separately map, according to a mapping rule (that is, a correspondence between a delay budget of the transmission of the plurality of data packet sets in the access network and the DRBs), the plurality of data packet sets to different DRBs for transmission. For example, the access network device receives a data packet set 1, and if it is determined that a delay of transmission of the data packet set 1 in the data network is 4.2 ms, the access network device may map the data packet set 1 to the DRBb for transmission. The UPF network element receives a data packet set 2, and if it is determined that a delay of transmission of the data packet set 2 in the data network is 6.2 ms, the UPF network element may map the data packet set 1 to the DRBc for transmission.

When the access network device receives one data packet set through a QoS flow, and determines that a delay budget of transmission of the data packet set in the access network is 4.2 ms, an SDAP layer of the access network device may map the data packet set to a DRBb corresponding to the QoS flow for transmission. In Table 4, different DRBs in the DRBa to the DRBd can meet different delay assurances. For example, different DRBs correspond to different priorities, maximum quantities of hybrid automatic repeat request (hybrid automatic repeat request, HARQ) retransmissions, and semi-persistent scheduling (semi-persistent scheduling, SPS) configurations, so that differentiated scheduling can be performed on data packet sets of different AN PSDB's in a same QoS flow on an air interface, to ensure a transmission requirement of the data packet set for an end-to-end stable and low delay.

In still another possible implementation, if the SMF network element configures that the XR service corresponds to a plurality of QoS flows (for example, refer to S603-a in Embodiment 1), the access network device may configure that each of the plurality of QoS flows corresponds to the plurality of DRBs (for example, a QoS flow a corresponds to the DRBa to the DRBd, a QoS flow b corresponds to the DRBa to the DRBd, and a QoS flow c corresponds to the DRBa to the DRBd), and configure the correspondence between the plurality of DRBs and the delay range to which the AN PSDB' belongs, as shown in Table 4.

In this case, for example, if the access network device receives one data packet set through the QoS flow a, and determines that a delay budget of transmission of the data packet set in the access network is 4.2 ms, the SDAP layer of the access network device may map the data packet set to the DRBb for transmission. If the access network device receives one data packet set through the QoS flow a, and determines that a delay budget of transmission of the data packet set in the access network is 5.5 ms, the SDAP layer of the access network device may map the data packet set to the DRBc for transmission. If the access network device receives one data packet set through the QoS flow b, and determines that a delay budget of transmission of the data packet set in the access network is 6.2 ms, the SDAP layer of the access network device may map the data packet set to the DRBc for transmission.

It may be understood that in another example, if the SMF network element configures that the XR service corresponds to the plurality of QoS flows, the access network device may configure that the plurality of QoS flows separately correspond to different DRBs. For example, each QoS flow corresponds to a plurality of DRBs, and different QoS flows correspond to different DRBs. For implementation in this case, refer to the foregoing descriptions. Details are not described again.

2. Descriptions of a specific implementation in which the access network device determines the LCH corresponding to the delay budget of the transmission of the data packet set in the access network

The XR service is used as an example. In a possible implementation, if the SMF network element configures that the XR service corresponds to one QoS flow, the access network device may configure a DRB corresponding to the QoS flow (one QoS flow corresponds to one DRB), a correspondence between the DRB and a plurality of LCHs, and a correspondence between the plurality of LCHs and the delay range to which the AN PSDB' belongs. Table 5 shows an example of a correspondence between the LCHs and the delay range to which the AN PSDB' belongs.

**Table 5: Example of a correspondence between the LCHs and the delay range to which the AN PSDB' belongs**

| Delay range to which AN PSDB' belongs | LCH identifier |
|---|---|
| (0, 2 ms] | a |
| (2 ms, 5 ms] | b |
| (5 ms, 10 ms] | c |
| Greater than 10 ms | d |

For example, after the access network device receives one data packet set through a QoS flow, the SDAP layer of the access network device maps the data packet set to a DRB corresponding to the QoS flow. If a delay budget of transmission of the data packet set in the access network is 4.2 ms, a PDCP layer of the access network device may map the data packet set to a corresponding LCHb associated with the DRB for transmission. In Table 5, different LCHs in the LCHa to the LCHd can meet different delay guarantees. For example, different LCHs correspond to different priorities, maximum quantities of HARQ retransmissions, and SPS configurations, so that differentiated scheduling can be performed on data packet sets of different AN PSDB's in a same DRB on an air interface, to ensure a transmission requirement of the data packet set for an end-to-end stable and low delay.

In still another possible implementation, if the SMF network element configures that the XR service corresponds to a plurality of QoS flows, the access network device may configure that the plurality of QoS flows separately correspond to a plurality of DRBs (one QoS flow corresponds to one DRB), that each of the plurality of DRBs corresponds to the plurality of LCHs, and the correspondence between the plurality of LCHs and the delay range to which the AN PSDB' belongs. For specific implementation, refer to the foregoing descriptions.

S703-b: The access network device sends second time information to the terminal device, where the second time information indicates earliest time when an access stratum of the terminal device delivers the data packet set to an upper layer. Correspondingly, the terminal device receives the second time information.

Herein, the upper layer of the terminal device may refer to a protocol layer above the access stratum of the terminal device, for example, including a PDU session layer, an RTP layer, an IP layer, and an application layer (referred to as the earliest time for ease of description).

For example, the access network device may determine the earliest time based on the receiving time when the access network device receives the data packet set and a delay budget of the data packet set on the air interface. For example, if the receiving time when the access network device receives the data packet set is T, and the delay budget of the transmission of the data packet set in the access network is 5 ms, the earliest time may be T + 5 ms. Optionally, the access network device alternatively determines the earliest time based on another possible parameter, for example, processing duration required by the upper layer of the terminal device to process the data packet set. For example, in the foregoing example, if the processing duration required by the upper layer of the terminal device to process the data packet set is 2 ms, the earliest time may be T + 5 ms - 2 ms (that is, T + 3 ms).

Considering that large uncertainty exists in air interface scheduling and transmission, for example, even if the delay budget of the transmission of the data packet set in the access network is 10 ms, an actual delay of transmission of the data packet set on the air interface may be only 2 ms. Generally, after receiving data packet sets in sequence, the access stratum of the terminal device may deliver the data packet sets to the upper layer after parsing. If delays of transmission of different data packet sets on the air interface are different, an end-to-end RTT perceived by a transport layer may change frequently, which may easily cause the transport layer to frequently adjust congestion control and an application layer to adjust a rate. Therefore, in this embodiment of this application, the access network device may determine the earliest time, and send the earliest time to the terminal device, so that the access stratum of the terminal device can deliver the data packet sets to the upper layer at the earliest time (or after the earliest time), thereby reducing a quantity of problems that the transport layer frequently adjusts the congestion control and the application layer adjusts the rate.

For example, a delay budget of transmission of a data packet set 1 in the access network is 10 ms, and an actual delay of transmission of the data packet set on the air interface is 2 ms. In this case, assuming that earliest time corresponding to the data packet set 1 is T1 + 10 ms, if the access network of the terminal device completes parsing of the data packet set 1 at T1 + 4 ms, the data packet set 1 may not be delivered to the upper layer first, but is delivered to the upper layer until T1 + 10 ms. For example, a timer (deliverTimer) of a data packet set granularity may be set at the access stratum of the terminal device, and duration of the timer = a time difference between the earliest time and current time. After timeout of the deliverTimer, the terminal device may deliver the data packet set to the upper layer.

For another example, assuming that earliest time corresponding to a data packet set 2 is T2 + 8 ms, the access network of the terminal device completes parsing of the data packet set 2 at T2 + 9 ms, and as T2 + 9 ms is later than T2 + 8 ms, the terminal device may immediately deliver the data packet set 2 to the upper layer.

In other words, when time when the access stratum of the terminal device completes parsing of the data packet set is earlier than or equal to the earliest time corresponding to the data packet set, the earliest time corresponding to the data packet set may be time when the access stratum of the terminal device delivers the data packet set to the upper layer (that is, delivery time); or when the time when the access stratum of the terminal device completes the parsing of the data packet set is later than the earliest time corresponding to the data packet set, the time when the access stratum of the terminal device delivers the data packet set to the upper layer (that is, the delivery time) may be later than the earliest time corresponding to the data packet set.

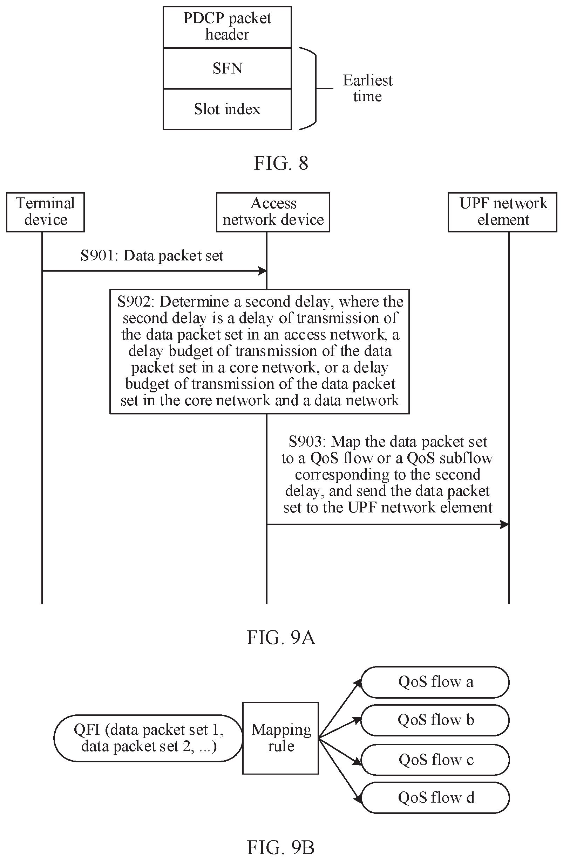

For example, the second time information may be GPS time/UTC time, or the second time information may include one or more of a system frame number (system frame number, SFN), a slot index (slot index), and a symbol index (symbol index). The second time information may be carried in an access stratum packet header corresponding to a fourth data packet in the data packet set, for example, a PDCP packet header or an SDAP packet header. The fourth data packet may be an initial data packet, a last data packet, or another possible data packet in the data packet set. FIG. 8 is a possible form of a PDCP packet header carrying earliest time.

### Embodiment 3

In Embodiment 3, Solution 3 is described in detail.

FIG. 9A is a schematic flowchart corresponding to a communication method according to an embodiment of this application. As shown in FIG. 9A, the method includes the following steps.

S901: A terminal device sends a data packet set to an access network device. Correspondingly, the access network device receives the data packet set.

S902: The access network device determines a second delay, where the second delay is a delay of transmission of the data packet set in an access network, a delay budget of transmission of the data packet set in a core network, or a delay budget of transmission of the data packet set in the core network and a data network.

For example, the terminal device may further send fifth time information to the access network device, where the fifth time information indicates sending time when the terminal device sends the data packet set, so that the access network device determines, based on the sending time when the terminal device sends the data packet set and receiving time when the access network device receives the data packet set, the delay of the transmission of the data packet set in the access network.

Alternatively, the access network device may obtain an arrival periodicity of a service corresponding to the data packet set and arrival time of an initial data packet set of the service, and further determine arrival time of the data packet set (that is, generation time when the terminal device generates the data packet set or the sending time when the terminal device sends the data packet set) based on the arrival periodicity and the arrival time of the initial data packet set of the service. Further, the access network device determines, based on the arrival time of the data packet set and the receiving time when the access network device receives the data packet set, the delay of the transmission of the data packet set in the access network.

Optionally, the access network device may determine, based on a pre-allocated delay budget (represented as 5GS PSDB) of transmission of the data packet set in the access network device and the core network and a delay (represented as δ₃) of the transmission of the data packet set in the access network, the delay budget of the transmission of the data packet set in the core network. That is, the delay budget of the transmission of the data packet set in the core network = 5GS PSDB - δ₃.

Optionally, the access network device may determine, based on an end-to-end delay budget (E2E PSDB) of the data packet set and the delay (that is, δ₃) of the transmission of the data packet set in the access network, the delay budget of the transmission of the data packet set in the core network and the data network. The delay budget of the transmission of the data packet set in the core network and the data network = E2E PSDB - δ₃.

S903: The access network device maps the data packet set to a QoS flow or a QoS subflow corresponding to the second delay, and sends the data packet set to the UPF network element.

For example, the access network device may receive configuration information from an SMF network element. The configuration information is for configuring a correspondence between a delay range to which the second delay belongs and the QoS flow or the QoS subflow. For specific implementation, refer to the descriptions of S603-a in Embodiment 1.

For example, refer to FIG. 9B. The access network device receives a plurality of data packet sets of an XR service, and the plurality of data packet sets correspond to a same QFI (for example, an access stratum of the terminal device maps the plurality of data packet sets to a same QoS flow). The access network device may map the plurality of data packets to different QoS flows according to a mapping rule (that is, a correspondence between the second delay and the QoS flow), and send the plurality of data packets to the UPF network element.

According to the foregoing method, the access network device can map, based on the second delay, the data packet set to the QoS flow or the QoS subflow corresponding to the second delay. For example, if the delay of the transmission of the data packet set in the access network is large, the data packet set may be mapped to a QoS flow or a QoS subflow with a small PDB; or if the delay of the transmission of the data packet set in the data network is small, the data packet set may be mapped to a QoS flow or a QoS subflow with a large PDB, so as to ensure a transmission requirement of the data packet set for an end-to-end stable and low delay

For the foregoing Embodiment 1 to Embodiment 3, it may be understood that:
1. The foregoing Embodiment 1 to Embodiment 3 may be separately implemented, or may be implemented in combination. For example, Embodiment 1 and Embodiment 2 are implemented in combination, or some or all steps in Embodiment 1 and some or all steps in Embodiment 2 are implemented in combination. The foregoing content focuses on differences between embodiments in Embodiment 1 to Embodiment 3. In a case that two embodiments do not violate each other, the Embodiment 1 to Embodiment 3 may be mutually referenced. In addition, in a same embodiment, different implementations or different examples may also be mutually referenced.
2. Step numbers in the flowcharts described in Embodiment 1 to Embodiment 3 are merely an example of an execution procedure, and do not constitute a limitation on an execution sequence of the steps. In embodiments of this application, there is no strict execution sequence between steps that do not have a time sequence dependency relationship with each other. In addition, not all steps shown in each flowchart are necessarily performed steps, and some steps may be added or deleted for each flowchart based on an actual requirement.

The foregoing mainly describes the solutions provided in embodiments of this application from a perspective of interaction between network elements or devices. It may be understood that, to implement the foregoing functions, the foregoing network elements or devices may include a corresponding hardware structure and/or a software module for implementing the various functions. A person skilled in the art should be easily aware that, in combination with units and algorithm steps of the various examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes outside of the scope of this application.

In embodiments of this application, functional unit division may be performed on the user plane functional network element and the access network device based on the foregoing method examples. For example, each functional unit may be obtained through division based on each corresponding function, or two or more functions may be integrated into one unit. The foregoing integrated unit may be implemented in a form of hardware, or may be implemented in a form of a software functional unit.

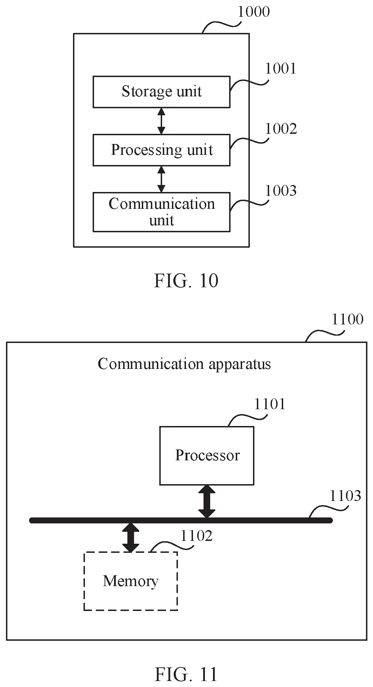

In a case in which the integrated unit is used, FIG. 10 shows a possible example block diagram of an apparatus according to an embodiment of this application. As shown in FIG. 10, an apparatus 1000 may include a processing unit 1002 and a communication unit 1003. The processing unit 1002 is configured to control and manage an action of the apparatus 1000. The communication unit 1003 is configured to support communication between the apparatus 1000 and another device. Optionally, the communication unit 1003 is also referred to as a transceiver unit, and may include a receiving unit and/or a sending unit, respectively configured to perform a receiving operation and a sending operation. The apparatus 1000 may further include a storage unit 1001, configured to store program code and/or data of the apparatus 1000.
1. The apparatus 1000 may be the access network device in the foregoing embodiments (for example, Embodiment 1 to Embodiment 3). The processing unit 1002 may support the apparatus 1000 in performing actions of the access network device in the foregoing method embodiments. Alternatively, the processing unit 1002 mainly performs an internal action of the access network device in the method embodiments, and the communication unit 1003 may support the communication between the apparatus 1000 and another device.

For example, in an embodiment, the communication unit 1003 is configured to receive a data packet set and first time information corresponding to the data packet set from a user plane functional network element; and the processing unit 1002 is configured to determine, based on the first time information and receiving time when the access network device receives the data packet set, a delay budget of transmission of the data packet set in an access network.

In a possible design, the processing unit 1002 is further configured to: determine a data radio bearer DRB or a logical channel LCH corresponding to the delay budget of the transmission of the data packet set in the access network; and map the data packet set to the DRB or the LCH, and send the data packet set to a terminal device by using the communication unit 1003.

In a possible design, the processing unit 1002 is further configured to determine, based on the delay budget of the transmission of the data packet set in the access network, earliest time when an access stratum of the terminal device delivers the data packet set to an upper layer; and the communication unit 1003 is further configured to send second time information to the terminal device, where the second time information indicates the earliest time when the access stratum of the terminal device delivers the data packet set to the upper layer.

2. The apparatus 1000 may be the user plane functional network element in the foregoing embodiments (for example, Embodiment 1 to Embodiment 3). The processing unit 1002 may support the apparatus 1000 in performing actions of the user plane functional network element in the foregoing method embodiments. Alternatively, the processing unit 1002 mainly performs an internal action of the user plane functional network element in the method embodiments, and the communication unit 1003 may support the communication between the apparatus 1000 and another device.

For example, in an embodiment, the communication unit 1003 is configured to receive a data packet set and fourth time information corresponding to the data packet set from an application server; and the processing unit 1002 is configured to determine a first delay based on the fourth time information and receiving time when the user plane functional network element receives the data packet set, where the first delay is a delay of transmission of the data packet set in a data network or a delay budget of transmission of the data packet set in the access network and a core network.

In a possible design, the processing unit 1002 is further configured to: determine a quality of service QoS flow or a QoS subflow corresponding to the first delay; map the data packet set to the QoS flow or the QoS subflow, and send the data packet set to the access network device by using the communication unit 1003.

In a possible design, the communication unit 1003 is further configured to receive configuration information from a session management functional network element, where the configuration information is for configuring a second delay range to be corresponding to the QoS flow or the QoS subflow, and the first delay is within the second delay range.

In a possible design, the communication unit 1003 is further configured to send the first time information to the access network device, where the first time information indicates the first delay or a third delay range, and the first delay is within the third delay range; or the first time information indicates first time, and the first time is determined based on sending time when the user plane functional network element sends the data packet set, a delay budget of the transmission of the data packet set in the data network, and the delay of the transmission of the data packet set in the data network.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in the form of software invoked by the processing element, and some units may be implemented in the form of hardware. For example, the units may be processing elements that are separately disposed, or may be integrated into a chip of the apparatus for implementation. In addition, the units may alternatively be stored in a memory in a form of a program, and are invoked by a processing element of the apparatus to perform functions of the units. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element or may be implemented in the form of software invoked by the processing element.

In an example, a unit in any one of the foregoing apparatuses may be configured to be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which the processing element schedules a program, the processing element may be a processor, for example, a general-purpose central processing unit (central processing unit, CPU) or another processor that can invoke the program. For another example, the units may be integrated and implemented in a form of a SoC.

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

Based on the foregoing embodiments, an embodiment of this application further provides a communication apparatus. As shown in FIG. 11, a communication apparatus 1100 may include a processor 1101. Optionally, the communication apparatus 1100 may further include a memory 1102. The memory 1102 may be disposed inside the communication apparatus 1100, or may be disposed outside the communication apparatus 1100. Optionally, the communication apparatus 1100 may further include a transceiver (not shown in FIG. 11 currently).

Specifically, the processor 1101 may be a central processing unit (central processing unit, CPU), a network processor (network processor, NP), or a combination of a CPU and an NP. The processor 1101 may further include a hardware chip. The foregoing hardware chip may be an application-specific integrated circuit (application-specific integrated circuit, ASIC), a programmable logic device (programmable logic device, PLD), or a combination thereof. The foregoing PLD may be a complex programmable logic device (complex programmable logic device, CPLD), a field-programmable logic gate array (field-programmable gate array, FPGA), a generic array logic (generic array logic, GAL), or any combination thereof.

The processor 1101 and the memory 1102 are connected to each other. Optionally, the processor 1101 and the memory 1102 are connected to each other via a bus 1103. The bus 1103 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 11, but this does not mean that there is only one bus or only one type of bus.

In an optional implementation, the memory 1102 is configured to store a program and the like. Specifically, the program may include program code, and the program code includes computer operation instructions. The memory 1102 may include a RAM, and may further include a non-volatile memory (non-volatile memory), for example, one or more disk memories. The processor 1101 executes the application program stored in the memory 1102, to implement the foregoing functions, so as to implement a function of the communication apparatus 1100.

For example, the communication apparatus 1100 may be the terminal device in the foregoing embodiments, or may be the network device in the foregoing embodiments.

In an embodiment, when the communication apparatus 1100 implements a function of the terminal device in the foregoing method embodiments, the transceiver may implement receiving and sending operations performed by the terminal device in the foregoing method embodiments; and the processor 1101 may implement an operation other than the receiving and sending operations performed by the terminal device in the foregoing method embodiments. For specific related descriptions, refer to related descriptions in the foregoing embodiments. Details are not described herein again.

In another embodiment, when the communication apparatus 1100 implements a function of the network device in the foregoing method embodiments, the transceiver may implement receiving and sending operations performed by the network device in the foregoing method embodiments; and the processor 1101 may implement an operation other than the receiving and sending operations performed by the network device in the foregoing method embodiments. For specific related descriptions, refer to related descriptions in the foregoing embodiments. Details are not described herein again.

An embodiment of this application further provides a communication system. The communication system includes at least one of the terminal device, the access network device, the user plane functional network element, and the application server in the foregoing embodiments.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method is applied to an access network device or a chip in the access network device, and the method comprises:
receiving a data packet set and first time information corresponding to the data packet set from a user plane functional network element; and
determining, based on the first time information and receiving time when the access network device receives the data packet set, a delay budget of transmission of the data packet set in an access network.

2. The method according to claim 1, wherein the method further comprises:
determining a data radio bearer DRB or a logical channel LCH corresponding to the delay budget of the transmission of the data packet set in the access network; and
mapping the data packet set to the DRB or the LCH, and sending the data packet set to a terminal device.

3. The method according to claim 2, wherein the DRB or the LCH is corresponding to a first delay range, and the delay budget of the transmission of the data packet set in the access network is within the first delay range.

4. The method according to any one of claims 1 to 3, wherein the method further comprises:
determining, based on the delay budget of the transmission of the data packet set in the access network, earliest time when an access stratum of the terminal device delivers the data packet set to an upper layer; and
sending second time information to the terminal device, wherein the second time information indicates the earliest time when the access stratum of the terminal device delivers the data packet set to the upper layer.

5. The method according to claim 4, wherein the second time information is carried in a packet data convergence protocol PDCP packet header corresponding to a data packet in the data packet set; or the second time information is carried in a service data adaptation SDAP packet header corresponding to the data packet.

6. The method according to any one of claims 1 to 5, wherein the first time information indicates a first delay, and the first delay is a delay of transmission of the data packet set in a data network or a delay budget of transmission of the data packet set in an access network and a core network; and
determining, based on the first time information and the receiving time when the access network device receives the data packet set, the delay budget of the transmission of the data packet set in the access network, comprises:
receiving third time information from the user plane functional network element, wherein the third time information indicates sending time when the user plane functional network element sends the data packet set;
determining, based on the receiving time when the access network device receives the data packet set and the sending time when the user plane functional network element sends the data packet set, a delay of transmission of the data packet set in the core network; and
determining, based on the delay of the transmission of the data packet set in the core network and the first delay, the delay budget of the transmission of the data packet set in the access network.

7. The method according to claim 6, wherein the third time information is carried in a general packet radio service tunneling protocol-user plane GTP-U packet header corresponding to a data packet in the data packet set.

8. The method according to any one of claims 1 to 5, wherein the first time information indicates first time, and the first time is determined based on sending time when the user plane functional network element sends the data packet set, a delay budget of transmission of the data packet set in a data network, and a delay of the transmission of the data packet set in the data network; and
determining, based on the first time information and the receiving time when the access network device receives the data packet set, the delay budget of the transmission of the data packet set in the access network, comprises:
determining, based on the receiving time when the access network device receives the data packet set and the first time, the delay budget of the transmission of the data packet set in the access network.

9. The method according to any one of claims 6 to 8, wherein the first time information is carried in the GTP-U packet header corresponding to the data packet in the data packet set.

10. The method according to any one of claims 1 to 5, wherein the first time information indicates sending time when an application server sends the data packet set; or the first time information indicates generation time when the application server generates the data packet set; and
determining, based on the first time information and the receiving time when the access network device receives the data packet set, the delay budget of the transmission of the data packet set in the access network, comprises:
determining, based on the receiving time when the access network device receives the data packet set and the sending time or the generation time, the delay budget of the transmission of the data packet set in the access network.

11. The method according to claim 10, wherein the first time information is carried in a real-time transport protocol RTP packet header corresponding to a data packet in the data packet set; or the first time information is carried in an internet protocol IP packet header corresponding to the data packet.

12. A communication method, wherein the method is applied to a user plane functional network element or a chip in the user plane functional network element, and the method comprises:
receiving a data packet set and fourth time information corresponding to the data packet set from an application server; and
determining a first delay based on the fourth time information and receiving time when the user plane functional network element receives the data packet set, wherein the first delay is a delay of transmission of the data packet set in a data network or a delay budget of transmission of the data packet set in an access network and a core network.

13. The method according to claim 12, wherein the method further comprises:
determining a quality of service QoS flow or a QoS subflow corresponding to the first delay; and
mapping the data packet set to the QoS flow or the QoS subflow, and sending the data packet set to an access network device.

14. The method according to claim 13, wherein the method further comprises:
receiving configuration information from a session management functional network element, wherein the configuration information is for configuring a second delay range to be corresponding to the QoS flow or the QoS subflow, and the first delay is within the second delay range.

15. The method according to any one of claims 12 to 14, wherein the method further comprises:
sending first time information to the access network device, wherein
the first time information indicates the first delay or a third delay range, and the first delay is within the third delay range; or
the first time information indicates first time, and the first time is determined based on sending time when the user plane functional network element sends the data packet set, a delay budget of the transmission of the data packet set in the data network, and the delay of the transmission of the data packet set in the data network.

16. The method according to claim 15, wherein the first time information is carried in a GTP-U packet header corresponding to a data packet in the data packet set.

17. The method according to claim 15 or 16, wherein the first time information comprises an index value, and the index value is associated with the first delay or the third delay range.

18. The method according to any one of claims 12 to 17, wherein the fourth time information indicates sending time when the application server sends the data packet set, or the fourth time information indicates generation time when the application server generates the data packet set.

19. The method according to any one of claims 12 to 18, wherein the fourth time information is carried in an RTP packet header corresponding to a data packet in the data packet set; or the fourth time information is carried in an IP packet header corresponding to the data packet.

20. A communication system, wherein the communication system comprises an access network device and a user plane functional network element, the access network device is configured to perform the method according to any one of claims 1 to 11, and the user plane functional network element is configured to perform the method according to any one of claims 12 to 19.

21. A communication apparatus, comprising a module configured to perform the method according to any one of claims 1 to 19.

22. A communication apparatus, comprising a processor, wherein the processor is coupled to a memory, and the memory has computer programs stored therein; and the processor is configured to invoke a part or all of the computer programs in the memory, to enable the method according to any one of claims 1 to 19 to be performed.

23. A computer-readable storage medium, wherein the storage medium has computer programs stored therein, and when a part or all of the computer programs are executed by a computer, the method according to any one of claims 1 to 19 is performed.

24. A computer program product, wherein when a computer reads and executes the computer program product, the method according to any one of claims 1 to 19 is performed.
